# EUROPEAN PATENT SPECIFICATION

(11) **EP 3 831 990 B1**
(45) Date of publication and mention of the grant of the patent: **28.09.2022**
(21) Application number: 20207382.1
(22) Date of filing: 13.11.2020
(51) Int. Cl.: D01H 1/00

(54) **SPINNING-PATTERN SETTING APPARATUS FOR A SPINNING MACHINE**
SPINNMUSTEREINSTELLVORRICHTUNG FÜR EINE SPINNMASCHINE
APPAREIL DE RÉGLAGE DE MOTIF DE FILAGE POUR UN MÉTIER À FILER

(30) Priority: 06.12.2019 JP 2019220814; 11.09.2020 JP 2020152763
(43) Date of publication of application: 09.06.2021
(73) Proprietor: Kabushiki Kaisha Toyota Jidoshokki, Kariya-shi, Aichi 448-8671 (JP)
(72) Inventor: ITO, Toru, Kariya-shi,, Aichi 448-8671 (JP)
(74) Representative: TBK

(56) References cited:
- EP-A2- 2 573 236
- JP-A- 2013 529 728

## Description

### BACKGROUND ART

The present invention relates to a spinning-pattern setting apparatus for a spinning machine.

Among conventional arts related to spinning-pattern setting apparatuses of spinning machines, apparatuses of operating and programming ring spinning machines are known, for example. Such apparatuses include an apparatus of operating and programming a ring spinning machine as disclosed in Japanese Patent Application Publication No. 2013-529728. The apparatus disclosed in the above Application Publication includes an actuation device configured to operate a driving means in response to a speed instruction, and an electronic programming device configured to generate programs for setting the progress of a count and/or twists along the length of a yarn. The electronic programming device includes a first interface suitable for designing the profile of a slub, and a conversion means suitable for converting parameters of the designed profile of the slub into the speed instruction for the actuation device. The electronic programming device also includes a second interface suitable for programming repetition along the yarn of a plurality of slubs designed with the first interface.

This type of apparatuses may display, for example, a blackboard pictorial image or a fabric pattern pictorial image generated in a simulation based on slub-pattern data set for the spinning machine. The blackboard pictorial image represents a slub yarn wound around the blackboard, which is generated in the simulation, while the fabric pattern pictorial image represents a fabric woven by the slub yarn spun based on the slub-pattern data, which is generated in the simulation.

To generate pictorial images of the slubs in the simulation in this type of apparatuses, the slub-pattern data is to be fixed after parameters of all the slubs are entered, then the fixed slub-pattern data is to be read by a simulator, and the pictorial image is to be generated in the simulation by the simulator. If, for example, the blackboard pictorial image or the fabric pattern pictorial image displayed has some undesired factors in a design and thus the slub-pattern data is intended to be changed, parameters that may affect the undesired factors in the design are to be modified based on the presumption, the slub-pattern data is to be fixed, and then the fixed slub-pattern data is to be read by the simulator to redisplay the simulated pictorial image. If the redisplayed pictorial image yet has some undesired factors in the design, modifying parameters, fixing the slub-pattern data, reading the fixed slub-pattern data by the simulator, and displaying the pictorial image are to be repeated until the displayed pictorial image matches an intended design. This parameter setting operation is complicated and takes a great time.

The present invention has been made in response to the above issue and is to provide a spinning-pattern setting apparatus for a spinning machine which is capable of setting a spinning pattern in a reduced time based on pictorial data generated based on spinning-pattern data.

### SUMMARY

In accordance with an aspect of the present invention, there is provided a spinning-pattern setting apparatus for a spinning machine that includes a parameter input unit used for entering a plurality of parameters of a yarn to be spun by the spinning machine, a pattern-data generation unit configured to generate pattern data from the parameters entered via the parameter input unit, a pictorial-data generation unit configured to generate pictorial data based on the pattern data generated by the pattern-data generation unit, and a display unit configured to display the pictorial data generated by the pictorial-data generation unit. The pattern-data generation unit is configured to automatically generate the pattern data without depending on an instruction by an operator. The pictorial-data generation unit is configured to generate, every time the pattern data is generated, the pictorial data so that the pictorial data is updated and redisplayed in the display unit.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 shows a schematic configuration diagram of a spinning-pattern setting apparatus for a spinning machine according to a first embodiment of the present invention;
FIG. 2 shows an illustrative display example in a display unit;
FIG. 3 shows an enlarged view of a parameter input window shown in FIG. 2;
FIG. 4 shows an illustrative example of a slub image window corresponding to a pictorial image;
FIG. 5 shows an illustrative example of a fabric image window corresponding to the pictorial image;
FIG. 6 is a flow diagram showing a procedure for updating and redisplaying the pictorial image;
FIG. 7 shows an illustrative display example in a display unit according to a second embodiment of the present invention;
FIG. 8 shows an illustrative example of a distribution-graph pictorial data window corresponding to distribution-graph pictorial data;
FIG. 9 is a flow diagram showing a procedure for updating and redisplaying the distribution-graph pictorial data; and
FIG. 10 is a flow diagram showing a procedure for updating and redisplaying the pictorial image as another example.

### DETAILED DESCRIPTION OF THE EMBODIMENTS

### First embodiment

The following will describe a spinning-pattern setting apparatus for a spinning machine according to a first embodiment of the present invention with reference to the accompanying drawings. The embodiment disclosed herein is described by taking an example of a slub-pattern setting apparatus of a spinning machine, capable of setting a slub pattern corresponding to a spinning pattern (hereinafter referred to as merely a "slub-pattern setting apparatus").

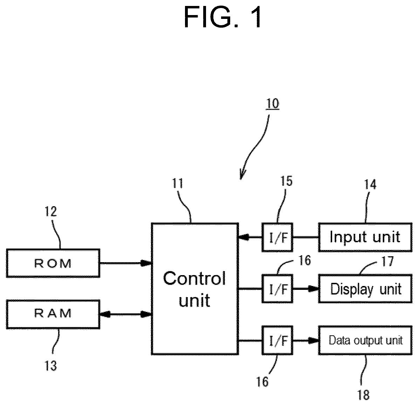

Referring to FIG. 1, a slub-pattern setting apparatus 10 includes a control device 11, a program memory 12, an operation memory 13, an input unit 14, an input interface 15, an output interface 16, a display unit 17, and a data output unit 18.

The control device 11 includes a CPU (not shown) that executes various programs. The control device 11 is connected to the program memory 12 and the operation memory 13. The control device 11 is also connected to the input unit 14 via the input interface 15, and to the display unit 17 via the output interface 16. The control device 11 serves as a pattern-data generation unit configured to generate slub-pattern data corresponding to spinning-pattern data.

The program memory 12 is a ROM, i.e., a read-only memory, configured to store various programs and data to be used for executing the programs. The various programs include a slub-pattern-data generating program for generating the slub-pattern data from parameters of slub yarns, and a display program for the display unit 17 displaying a pictorial image corresponding to pictorial data generated in a simulation based on the slub-pattern data. The control device 11 also serves as a pictorial-data generation unit configured to generate the pictorial data based on pattern data. In other words, the control device 11 serves as a simulation unit configured to generate the pictorial image, corresponding to the pictorial data, in the simulation based on the slub-pattern data generated by the pattern-data generation unit.

The operation memory 13 is a RAM, i.e., a random-access memory, configured to read out and rewrite data, and temporarily stores data entered via the input unit 14 and results processed by the control device 11. Specifically, the operation memory 13 is configured to store the parameters of the slub yarns entered via the input unit 14, the slub-pattern data generated by the control device 11, and the data of the pictorial images of the slub yarns generated in the simulation based on the slub-pattern data.

The input unit 14 serves as a parameter input unit, which is specifically a keyboard. An operator operates the input unit 14 to enter the parameters of the slub yarns such as a pitch (mm), a length (mm), and a slub thickness (%). The input unit 14 is also used for entering various other data. The pitch refers to a length of an interval between any two adjacent slubs. The length refers to a length of the slub. The slub thickness refers to a thickness of the slub expressed as a percentage of the thickness of the slub to a reference thickness of the slub yarn, where the reference thickness of the slub yarn refers to a thickness of the pitch portion of the slub yarn, i.e., a thickness of the slub yarn at the interval between any two adjacent slubs. In other words, the slub thickness is set to exceed 100%. The data entered via the input unit 14 is transferred to the control device 11 via the input interface 15. The input unit 14 may be a touch panel, instead of the keyboard, integrated with a display screen so as to have both a display function and an input function.

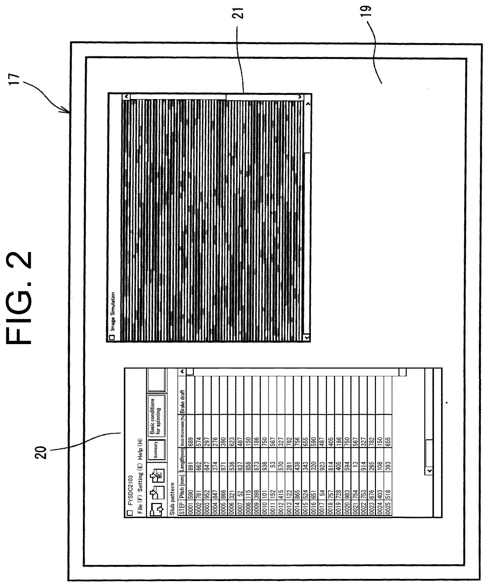

The display unit 17, such as a liquid crystal display, is configured to display various data and the pictorial data. The display unit 17 is connected to the control device 11 via the output interface 16. Referring to FIG. 2, a display screen 19 of the display unit 17 displays a parameter input window 20. The display screen 19 also displays the pictorial image such as a slub image window 21 and a fabric image window 22. FIG. 2 shows only the parameter input window 20 and the slub image window 21, but not the fabric image window 22. The slub image window 21 and the fabric image window 22 correspond to the pictorial images.

The data output unit 18 is connected to the control device 11 via the output interface 16. The data output unit 18 is an external storage medium such as a USB memory, used for retrieving data and programs from the operation memory 13.

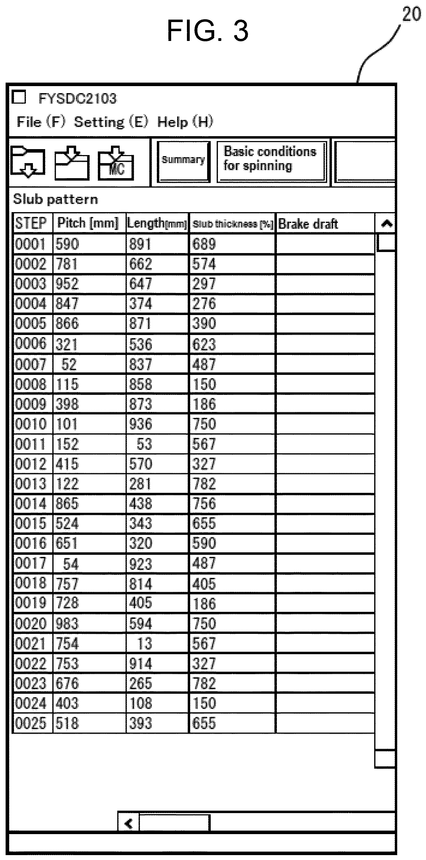

Referring to FIGS. 2 and 3, the parameter input window 20 displayed in the display screen 19 will now be described. The parameter input window 20 serves as a parameter input panel, and is a window that displays the parameters of the slub yarns. The parameters are used for determining the slub pattern that is used by the spinning machine for spinning the slub yarn. The parameter input window 20 displays the parameters entered via the input unit 14. Referring to FIG. 3, the slub pattern is determined by entering the parameters of the slub yarn, i.e., the pitch (mm), the length (mm), and the slub thickness (%), for each step for spinning the slub yarn. In the present embodiment, a maximum of thousand steps is available for the entry of the parameters that determine the slub patterns. The parameters entered and displayed in the parameter input window 20 are transferred to the control device 11. Every time the parameters are entered, the parameters are transferred to the control device 11, and the control device 11 generates the slub-pattern data.

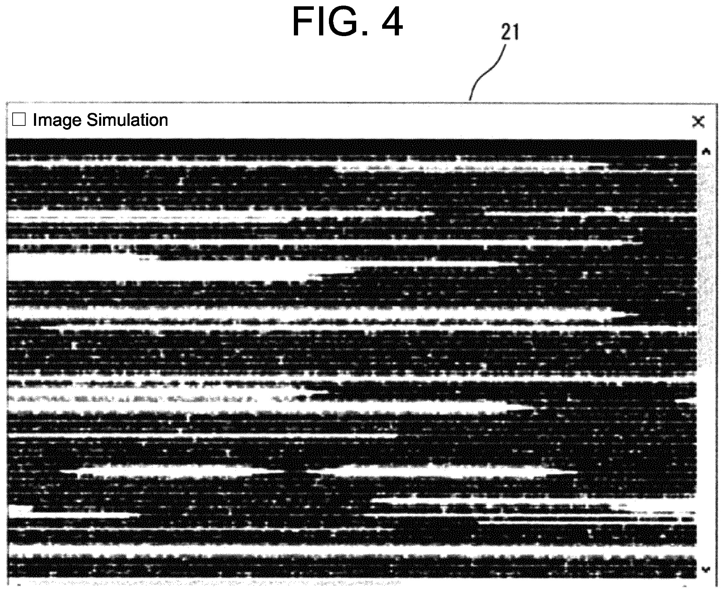

The slub image window 21 corresponds to the pictorial image generated in the simulation based on the slub-pattern data generated from the entered parameters. The slub image window 21 schematically shown in FIG. 2 displays a state of the slub yarn wound around a blackboard, which is generated in the simulation by the control device 11 based on the slub-pattern data. In other words, the slub image window 21 displays the pictorial image of the slub yarn that is spun in the simulation. Referring to FIG. 4, an illustrative example of the slub image window 21 is shown. In the slub image window 21 shown in FIG. 4, white portions represent the slub yarn wound around the blackboard and black portions represent the blackboard seen through the wound slub yarn. In the slub image window 21, the slub yarn displayed as the white portions extends in the lengthwise direction and is arranged in the transverse direction to the lengthwise direction. For detailed settings of the pictorial image of the slub yarn displayed in the slub image window 21, a window for setting (not shown), i.e., a window other than the parameter input window 20, is used.

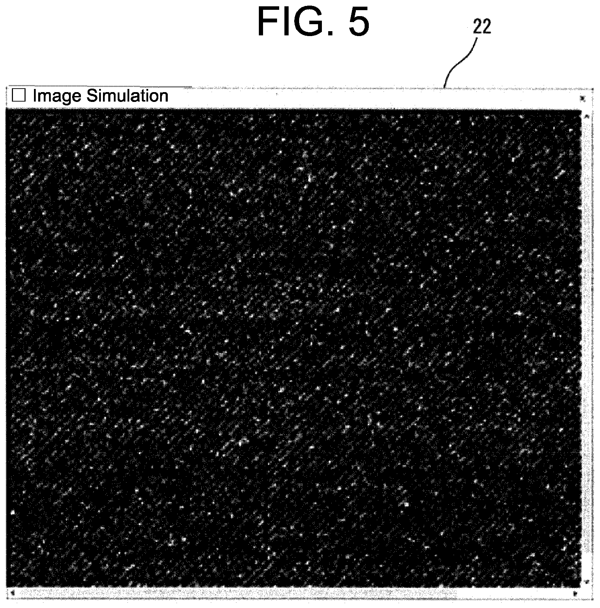

Another pictorial image of the data generated in the simulation is also displayed in the fabric image window 22 shown in FIG. 5, in addition to the slub image window 21 that displays the slub yarn generated in the simulation. The fabric image window 22 displays the pictorial image of fabric woven by the slub yarn, which is generated in the simulation. Referring to FIG. 5, an illustrative example of the fabric image window 22 is shown. The fabric image window 22 displays weft yarns of the slub yarns generated in the simulation. In addition, the fabric image window 22 may display a fabric image corresponding to types of weaves such as a plain weave and a twill weave. In the fabric image window 22, the slub yarns extend in the lengthwise direction and the warp yarns extend in the transverse direction to the lengthwise direction. For detailed settings of the pictorial image of the fabric to be displayed in the fabric image window 22, a window for setting (not shown), i.e., a window other than the parameter input window 20, is used.

In the display screen 19, either the slub image window 21 or the fabric image window 22 is displayed together with the parameter input window 20, by the display program. In the first embodiment described above, a first display state and a second display state are selectively switchable: the first display state includes the slub image window 21 together with the parameter input window 20, whereas the second display state includes the fabric image window 22 together with the parameter input window 20.

The slub-pattern data is determined by entering the parameters of the slub yarn for each step. The entered parameters are transferred to the control device 11 serving as the pattern-data generation unit, and the control device 11 generates the slub-pattern data from the entered parameters. The generated slub-pattern data is transferred to the control device 11 serving as the simulation unit, and the control device 11 generates slub image data or fabric image data generated in the simulation based on the slub-pattern data. The display unit 17 displays one of the pictorial images generated based on the slub image data and the fabric image data generated by the control device 11. The pictorial images correspond to the slub image window 21 and the fabric image window 22.

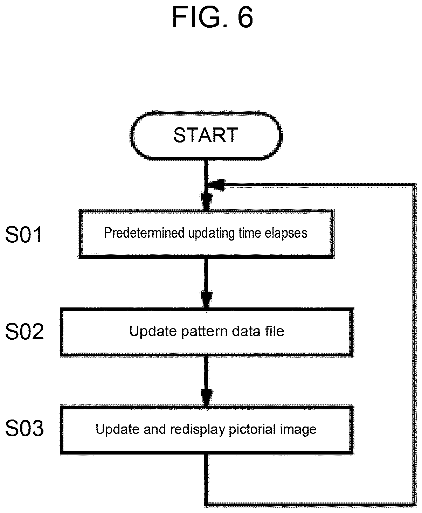

Referring to FIG. 6, a procedure for updating and redisplaying the slub image window 21 and the fabric image window 22 is shown. A predetermined updating time elapses periodically in Step S01. Then, the control device 11 outputs the slub-pattern data generated from the parameters entered at that point of time into a pattern data file to update the pattern data file in Step S02. The pattern data file is automatically updated every time the predetermined updating time elapses, without depending on an instruction by the operator. When any change is made in some of the parameters by the operator within the predetermined updating time, the slub-pattern data generated from the changed parameters is reflected on the pattern data file so that the pattern data file is updated. The predetermined updating time is set in the unit of seconds (e.g. 10 sec.). The predetermined updating time is enabled to be changed in a window for setting, i.e., a window other than the parameter input window 20.

The control device 11 then generates the slub image data and the fabric image data generated in the simulation based on the pattern data file that is updated every time the predetermined updating time elapses, and updates and redisplays the pictorial image displayed in the display screen 19 in Step S03. Specifically, the slub image window 21 and the fabric image window 22 displayed in the display screen 19 are updated and redisplayed. In the embodiment described above, the pattern data file is periodically updated regardless of the presence or absence of any change in the parameters of the slub yarn. The pictorial image is updated and redisplayed by reflecting any change in the parameters if the change is made within the predetermined updating time, while no change is made in the pictorial image even if updating is performed when no change is made in the parameters within the predetermined updating time.

Operations of the slub-pattern setting apparatus 10 will now be described. First, the operator activates the slub-pattern setting apparatus 10. The activation allows the slub-pattern setting apparatus 10 to display either the slub image window 21 or the fabric image window 22 in the display screen 19 of the display unit 17, in addition to the parameter input window 20.

The operator operates the slub-pattern setting apparatus 10 to display the parameter input window 20 in the display screen 19, and operates the input unit 14 to enter the parameters used for determining the slub-pattern data. Specifically, entering the pitch (mm), the length (mm), and the slub thickness (%) is repeated in each step. The entered parameters are displayed in the parameter input window 20.

The slub-pattern data is output into the pattern data file, and the slub image data and the fabric image data are generated based on the pattern data file and shown as the pictorial images. The operator checks the slub image window 21 and the fabric image window 22 displayed in the display screen 19 to determine whether to fix the slub pattern.

In the embodiment described above, the slub-pattern data is automatically output into the pattern data file every time the predetermined updating time elapses even in the middle of the slub-pattern data being edited. The slub image data and the fabric image data are generated based on the generated pattern data file, and the pictorial images generated based on the slub image data and the fabric image data are updated and redisplayed. In other words, even in the middle of the slub-pattern data being edited by entering the parameters into the parameter input window 20, the slub image window 21 and the fabric image window 22 are updated and redisplayed based on the slub-pattern data under being edited.

The operator checks the pictorial images in the slub image window 21 and the fabric image window 22 in the middle of editing the slub-pattern data, and then fixes the final slub-pattern data. The slub-pattern data is allowed to be changed by changing some of the parameters even after the slub-pattern data is fixed. The operator downloads the fixed pattern data file from the data output unit 18 into the external storage medium such as the USB memory, and then enters the fixed pattern data file into the spinning machine (not shown). The spinning machine spins the slub yarn based on the fixed slub-pattern data.

The following will describe the operational effects of the slub-pattern setting apparatus 10 according to the first embodiment.
(1) The control device 11 serving as the pattern-data generation unit generates the slub-pattern data from the parameters entered via the input unit 14. The control device 11 serving as the simulation unit generates the pictorial images in the simulation based on the slub-pattern data. The display unit 17 displays one of the pictorial images generated by the control device 11. Since the pictorial image displayed in the display unit 17 is generated based on the slub-pattern data under editing and is automatically updated, the operator is enabled to check the pictorial images, even in the middle of editing, generated in the simulation based on the slub-pattern data under editing, and to identify how the pictorial images change by the change in the parameters in real time. This simplifies the parameter setting operation based on the pictorial image generated in the simulation and thus greatly reduces the time for the operation.
(2) The control device 11 displays the parameter input window 20, which is used for entering the parameters of the slub yarn, together with the pictorial image in the display unit 17. This enables the operator to concurrently compare the entered parameters with the pictorial image on the same screen, which allows the operator to easily identify how the pictorial image changes by the change in the parameters.
(3) The yarn to be spun is the slub yarn, and the spinning-pattern data is the slub-pattern data specified by the pitch, the length, and the slub thickness that are the parameters of the slub yarn. This enables the slub-pattern data to be generated from the parameters of the slub yarn such as the pitch, the length, and the slub thickness, the pictorial image generated in the simulation based on the slub-pattern data to be displayed, and also the parameter input window 20 of the parameters of the slub yarn to be displayed.
(4) The pictorial image displayed in the display unit 17 is automatically updated every time the predetermined updating time elapses. Since the pictorial image displayed in the display unit 17 is automatically updated every time the predetermined updating time elapses, the operator is enabled to check the pictorial image generated based on the slub-pattern data that reflects any change in the parameters when some of the parameters are changed.
(5) The slub image window 21 corresponding to the pictorial image shows the state of the slub yarn wound around the blackboard, which is generated in the simulation based on the slub-pattern data. The fabric image window 22 displays the pictorial image of the fabric woven by the slub yarn, which is generated in the simulation based on the slub-pattern data. The slub image window 21 and the fabric image window 22, generated based on the slub-pattern data under editing in the simulation, are enabled to be displayed.
(6) The pictorial image that reflects the slub-pattern data under editing is always allowed to be displayed, which enables the operator to check the pictorial image any time while editing the slub-pattern data.

### Second embodiment

The following will describe a spinning-pattern setting apparatus of a spinning machine according to a second embodiment of the present invention with reference to the accompanying drawings. The second embodiment is different from the first embodiment in that distribution-graph pictorial data corresponding to the pictorial data is displayed in the display unit. In the description of the second embodiment, descriptions of components identical with those of the first embodiment described above will be omitted or simplified by providing the identical reference numerals as those of the first embodiment.

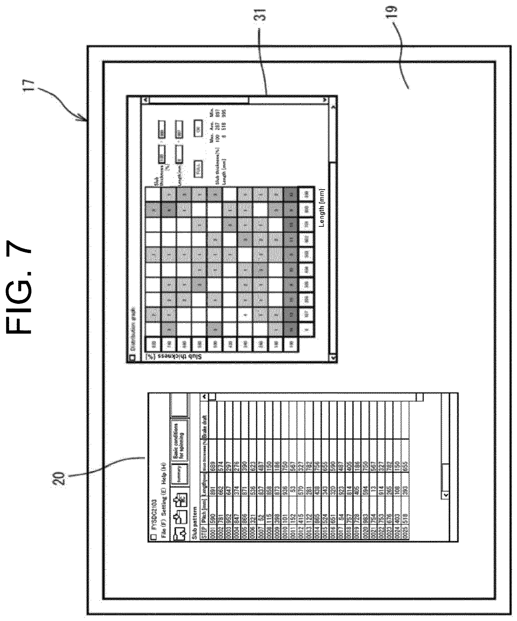

Referring to FIG. 7, the display screen 19 of the display unit 17 of the second embodiment displays a distribution-graph pictorial data window 31 corresponding to the pictorial data, in addition to the parameter input window 20. It should be noted that the display screen 19 is configured to display the slub image window 21 and the fabric image window 22, in addition to the distribution-graph pictorial data window 31, although these windows are not shown in FIG. 7.

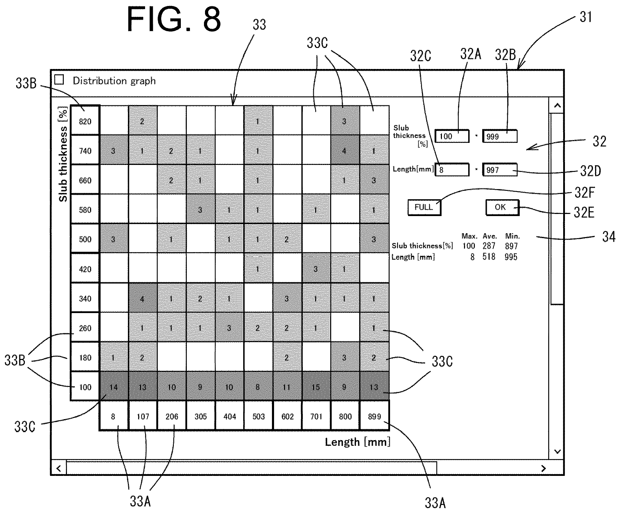

The distribution-graph pictorial data window 31 is the pictorial data that visually shows a distribution of the slub patterns based on the slub-pattern data generated from the entered parameters. Referring to FIG. 8, an illustrative example of the distribution-graph pictorial data window 31 is shown. The distribution-graph pictorial data window 31 shown in FIG. 8 includes a range input field 32, a distribution-graph display field 33, and a numerical value display field 34. The range input field 32 is used for specifying ranges of the thickness (%) and length (mm), i.e., the parameters of the slub yarn. The range input field 32 includes input boxes 32A and 32B for specifying the range of the thickness (%). The range input field 32 also includes input boxes 32C and 32D for specifying the range of the length (mm). The range input field 32 also includes an OK button 32E used for fixing the entered ranges of thickness (%) and length (mm), and a FULL button 32F used for specifying the maximum ranges of thickness (%) and length (mm).

The distribution-graph display field 33 includes a length cell group in a horizontal axis, a thickness cell group in a vertical axis, and a number-of-yarns cell group of the rest of the cells arranged in a matrix. The length cell group includes a plurality of length cells 33A. Each of the length cells 33A shows the length (mm), i.e., the parameter of the slub yarn. The plurality of the length cells 33A (ten cells) showing the length (mm) is arranged in the horizontal direction in the distribution-graph display field 33. The length cells 33A show values of the lengths (mm), i.e., the parameters of the slub yarn, within the range of the length (mm) specified in the range input field 32. The values shown in the plurality of the length cells 33A increase in the order from left to right.

The thickness cell group includes a plurality of thickness cells 33B. Each of the thickness cells 33B shows the thickness (%), i.e., the parameter of the slub yarn. The plurality of the thickness cells 33B (ten cells) showing the thickness (%) is arranged in the vertical direction in the distribution-graph display field 33. The thickness cell 33B show values of the thicknesses (%), i.e., the parameters of the slub yarn, within the range of the thickness (%) specified in the range input field 32. The values shown in the plurality of the thickness cells 33B increase in the order from bottom to top.

The number-of-yarns cell group includes a plurality of number-of-yarns cells 33C arranged in the matrix. The number of the number-of-yarns cells 33C of the number-of-yarns cell group is a hundred (10 × 10). Each of the number-of-yarns cells 33C shows the number of the slub yarns specified by the length (mm) in the corresponding length cell 33A and the thickness (%) in the corresponding thickness cell 33B. Lightness of the background of the number-of-yarns cell 33C gradually decreases as the value of the number of the slub yarns shown in the number-of-yarns cell 33C increases.

The numerical value display field 34 is a table indicating the minimum value, the average value, and the maximum value of each of the thickness (%) and the length (mm) that are displayed in the distribution-graph pictorial data window 31.

The distribution-graph display field 33 of the second embodiment is a graph of distribution of the number of the slub yarns specified by the thicknesses (%) and the lengths (mm), in which the plurality of the number-of-yarns cells 33C is arranged in the matrix with the plurality of length cells 33A in the horizontal axis and the plurality of thickness cells 33B in the vertical axis.

In the display screen 19, the distribution-graph pictorial data window 31 is displayed together with the parameter input window 20, by the display program. In the second embodiment described above, the first display state, the second display state, and a third display state are selectively switchable: the first display state includes the slub image window 21 together with the parameter input window 20, the second display state includes the fabric image window 22 together with the parameter input window 20, and the third display state includes the distribution-graph pictorial data window 31 together with the parameter input window 20.

The control device 11 generates the slub-pattern data from the parameters, and generates the distribution-graph pictorial data based on the slub-pattern data. The display unit 17 displays the distribution-graph pictorial data window 31 serving as the distribution-graph pictorial data corresponding to the pictorial data, generated by the control device 11.

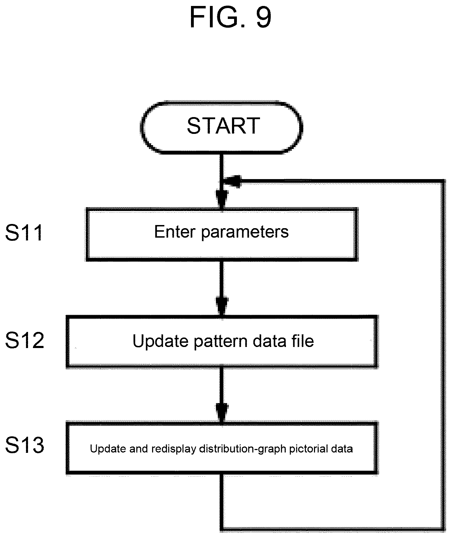

Referring to FIG. 9, a procedure for updating and redisplaying the distribution-graph pictorial data window 31 is shown. When the parameters of the slub yarn are entered in Step S11 while the slub-pattern data is being edited, then, the control device 11 reflects the parameters entered at that point of time on the slub-pattern data, and outputs the slub-pattern data into the pattern data file to update the pattern data file in Step S12. In other words, when the parameters are entered, the pattern data file is automatically updated without depending on the instruction by the operator. When any change is made in the parameters by the operator, the slub-pattern data generated from the changed parameters is reflected on the pattern data file so that the pattern data file is updated.

Based on the pattern data file updated by reflecting the entered parameters, the control device 11 updates the distribution-graph pictorial data window 31 that is displayed in the display screen 19, in Step S13. In the second embodiment described above, the pattern data file is updated every time any of the parameters of the slub yarn is changed. In other words, the distribution-graph pictorial data window 31 is updated and redisplayed by reflecting any change in the parameters, whereas the distribution-graph pictorial data window 31 is not updated when no change is made in the parameters.

As to the distribution-graph pictorial data window 31 displayed in the display screen 19 of the second embodiment described above, when the distribution-graph pictorial data window 31 is updated by entering the parameters, updating is performed only on the cells, of the distribution-graph display field 33, affected by some change in the corresponding parameters, but not on the rest cells, of the distribution-graph display field 33, which are not affected by the change in the corresponding parameters. In this case, the control device 11, upon any change in the parameters of the slub yarn, compares the slub-pattern data before and after the change, and updates only the cells, of the distribution-graph display field 33, affected by the difference in the slub-pattern data. The control device 11 does not update the distribution-graph pictorial data window 31, even if some change is made in the parameters of the slub yarn, unless the change causes the distribution-graph display field 33 to have some change that is identified by comparing the slub-pattern data before and after the change in the parameters.

In the second embodiment described above, the control device 11 is configured to automatically generate the pattern data without depending on the instruction by the operator upon some change in the parameters. Every time the pattern data is generated, the control device 11 generates and updates the distribution-graph pictorial data window 31 to be redisplayed in the display unit 17. The operator is enabled to check the distribution-graph pictorial data window 31 generated based on the pattern data under editing, which allows the operator to identify how the distribution-graph pictorial data window 31 changes by the change in the parameters in real time. The operator is enabled to visually check the distribution of the slub yarns by checking the distribution-graph pictorial data window 31. The operator is enabled to intuitively recognize the difference between the number-of-yarns cells 33C showing large values and the number-of-yarns cells 33C showing small values by the difference in the lightness of the background of the number-of-yarns cell 33C.

In the second embodiment described above, the distribution-graph pictorial data window 31 is updated and redisplayed by reflecting some change in the parameters, whereas the distribution-graph pictorial data window 31 is not updated when no change is made in the parameters. This reduces a load on the apparatus to be caused by updating and redisplaying the distribution-graph pictorial data window 31. As to the distribution-graph pictorial data window 31 displayed in the display screen 19 of the second embodiment described above, updating is performed only on the part, of the distribution-graph display field 33, affected by some change in the corresponding parameters, but not on the rest part, of the distribution-graph display field 33, which are not affected by the change in the corresponding parameters. As a result, the distribution-graph pictorial data window 31 causes less flicker than a case where the entire distribution-graph pictorial data window 31 is updated even including the part, of the distribution-graph pictorial data window 31, not affected by the change in the parameters, which reduces a load on the operator's eyes.

In the second embodiment described above, the ranges of thickness (%) and length (mm) shown in the distribution-graph display field 33 are changeable by changing values to be entered in the range input field 32 in the distribution-graph pictorial data window 31.

The scope of the present invention is not limited to the embodiments described above, but is intended to include any modifications equivalent in essence to the scope of the invention. For example, modifications as exemplified below may be made to the embodiments described above as long as they fall within the scope of the claims.

In the first and second embodiments described above, the slub pattern corresponding to the spinning pattern is described as an example. However, the spinning pattern is not limited to the slub pattern. The spinning pattern is applicable to a color combination pattern of the yarn to be spun, instead of the slub pattern. In this case, parameters for determining the color combination pattern are different from the parameters of the slub yarn.

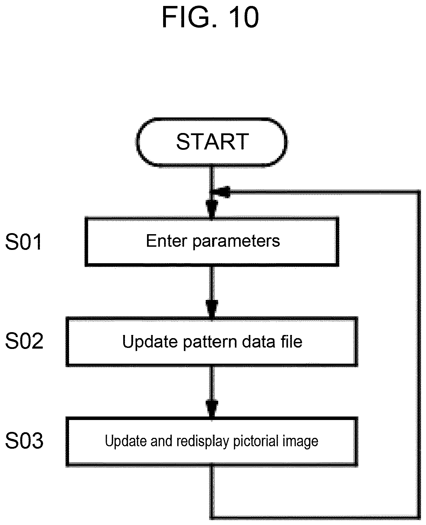

In the first embodiment described above, the pictorial image displayed in the display unit 17 is automatically updated in the predetermined cycles while the slub-pattern data is being edited. However, the scope of the present invention is not limited to the embodiment described above. For example, as shown in FIG. 10, when some of the parameters of the slub yarn are entered while the slub-pattern data is being edited, the entered parameters may be reflected to update the pattern data file, and then the pictorial image may be updated based on the updated pattern data file and redisplayed. In this case, the pictorial image displayed in the display unit 17 is updated and redisplayed every time some of the parameters are entered or changed, but is not updated without any entry or change in the parameters. This reduces a load on the apparatus to be caused by updating and redisplaying the pictorial image. Instead of updating and redisplaying the entire pictorial image at once, updating may be performed only on part of the distribution-graph pictorial data, as in the second embodiment described above, affected by some change in the parameters, but not on the rest of the distribution-graph pictorial data not affected by the change in the parameters.

In the first and second embodiments described above, the pictorial data that reflects the slub-pattern data under editing is always shown. However, the scope of the present invention is not limited to the embodiments described above. For example, the pictorial data may not be shown temporarily while the parameters are being entered, and may be shown after completion of the parameter entry. To be specific, this case may be applied when part or the entire of the pictorial data is hidden by overlapping with the parameter input window 20 while the parameters are being entered.

In the first and second embodiments described above, the pattern data is output into the pattern data file. However, the scope of the present invention is not limited to the embodiments described above. The pattern data may be output in other method than the method of outputting the pattern data into the pattern data file. For example, the pattern data may be output via a socket communication such as a TCP/IP based communication.

As to distribution-graph pictorial data of the second embodiment described above, when the distribution-graph pictorial data is updated by entering the parameters, updating of the distribution-graph pictorial data displayed in the display unit 17 may be performed only on the part of the distribution-graph pictorial data affected by some change in the parameters, but not on the rest of the distribution-graph pictorial data not affected by the change in the parameters. However, the scope of the present invention is not limited to the embodiment described above. For example, when the distribution-graph pictorial data is updated by entering the parameters, the entire distribution-graph pictorial data may be updated including the part of the distribution-graph pictorial data not affected by some change in the parameters, not only the part of the distribution-graph pictorial data affected by the change in the parameters.

In the second embodiment described above, the distribution-graph pictorial data is updated and redisplayed every time any of the parameters are entered or changed while the slub-pattern data is being edited. However, the scope of the present invention is not limited to the embodiment described above. For example, the distribution-graph pictorial data in the display unit 17 may be automatically updated and redisplayed in the predetermined cycles while the slub-pattern data is being edited.

## Claims

1. A spinning-pattern setting apparatus (10) for a spinning machine, comprising:
a parameter input unit (14) used for entering a plurality of parameters of a yarn to be spun by the spinning machine;
a pattern-data generation unit configured to generate pattern data from the parameters entered via the parameter input unit (14);
a pictorial-data generation unit configured to generate pictorial data (21, 22, 31) based on the pattern data generated by the pattern-data generation unit; and
a display unit (17) configured to display the pictorial data (21, 22, 31) generated by the pictorial-data generation unit, **characterized in that**
the pattern-data generation unit is configured to automatically generate the pattern data without depending on an instruction by an operator, and
the pictorial-data generation unit is configured to generate, every time the pattern data is generated, the pictorial data (21, 22, 31) so that the pictorial data (21, 22, 31) is updated and redisplayed in the display unit (17).

2. The spinning-pattern setting apparatus (10) for the spinning machine according to claim 1, **characterized in that**
the pictorial data (21, 22, 31) is a pictorial image (21, 22) generated in a simulation based on the pattern data.

3. The spinning-pattern setting apparatus (10) for the spinning machine according to claim 1, **characterized in that**
the pictorial data (21, 22, 31) is a distribution-graph pictorial data (31) generated based on the pattern data.

4. The spinning-pattern setting apparatus (10) for the spinning machine according to claim 1, **characterized in that**
the pattern-data generation unit is configured to control the display unit (17) to display a parameter input panel (20) together with the pictorial data (21, 22, 31).

5. The spinning-pattern setting apparatus (10) for the spinning machine according to any one of claims 1 to 3, **characterized in that**
the yarn to be spun is a slub yarn, and
the pattern data is slub-pattern data specified by the parameters of the slub yarn including a pitch, a length, and a slub thickness.

6. The spinning-pattern setting apparatus (10) for the spinning machine according to any one of claims 1 to 5, **characterized in that**
the display unit (17) is configured to display the pictorial data (21, 22, 31) that is automatically updated every time a predetermined updating time elapses.

7. The spinning-pattern setting apparatus (10) for the spinning machine according to any one of claims 1 to 5, **characterized in that**
the display unit (17) is configured to update and redisplay the pictorial data (21, 22, 31) when at least one of the parameters is changed.

8. The spinning-pattern setting apparatus (10) for the spinning machine according to any one of claims 1 to 7, **characterized in that**
the display unit (17) is configured to update and redisplay only part of the pictorial data (21, 22, 31) that is changed.

## Patentansprüche

1. Spinnmustereinstellvorrichtung (10) für eine Spinnmaschine, mit:
einer Parametereingabeeinheit (14), die für ein Eingeben einer Vielzahl von Parametern eines Garns, das durch die Spinnmaschine zu spinnen ist, verwendet wird;
einer Musterdatenerzeugungseinheit, die konfiguriert ist, Musterdaten von den Parametern, die über die Parametereingabeeinheit (14) eingegeben werden, zu erzeugen;
einer Bildhafte-Daten-Erzeugungseinheit, die konfiguriert ist, bildhafte Daten (21, 22, 31) auf der Grundlage der Musterdaten, die durch die Musterdatenerzeugungseinheit erzeugt werden, zu erzeugen; und
einer Anzeigeeinheit (17), die konfiguriert ist, die bildhaften Daten (21, 22, 31), die durch die Bildhafte-Daten-Erzeugungseinheit erzeugt werden, anzuzeigen, **dadurch gekennzeichnet, dass**
die Musterdatenerzeugungseinheit konfiguriert ist, die Musterdaten automatisch zu erzeugen, ohne von einer Anweisung einer Bedienungsperson abhängig zu sein, und
die Bildhafte-Daten-Erzeugungseinheit konfiguriert ist, jedes Mal, wenn die Musterdaten erzeugt werden, die bildhaften Daten (21, 22, 31) zu erzeugen, sodass die bildhaften Daten (21, 22, 31) aktualisiert werden und in der Anzeigeeinheit (17) erneut angezeigt werden.

2. Spinnmustereinstellvorrichtung (10) für die Spinnmaschine nach Anspruch 1, **dadurch gekennzeichnet, dass**
die bildhaften Daten (21, 22, 31) ein bildhaftes Bild (21, 22) sind, das in einer Simulation auf der Grundlage der Musterdaten erzeugt wird.

3. Spinnmustereinstellvorrichtung (10) für die Spinnmaschine nach Anspruch 1, **dadurch gekennzeichnet, dass**
die bildhaften Daten (21, 22, 31) bildhaften Verteilungsgraphdaten (31) sind, die auf der Grundlage der Musterdaten erzeugt werden.

4. Spinnmustereinstellvorrichtung (10) für die Spinnmaschine nach Anspruch 1, **dadurch gekennzeichnet, dass**
die Musterdatenerzeugungseinheit konfiguriert ist, die Anzeigeeinheit (17) zu steuern, um ein Parametereingabefeld (20) zusammen mit den bildhaften Daten (21, 22, 31) anzuzeigen.

5. Spinnmustereinstellvorrichtung (10) für die Spinnmaschine nach einem der Ansprüche 1 bis 3, **dadurch gekennzeichnet, dass**
der zu spinnende Garn ein knotiges Garn ist und
die Musterdaten Knotenmusterdaten sind, die durch die Parameter des knotigen Garns spezifiziert werden, die einen Abstand, eine Länge und eine Knotendicke umfassen.

6. Spinnmustereinstellvorrichtung (10) für die Spinnmaschine nach einem der Ansprüche 1 bis 5, **dadurch gekennzeichnet, dass**
die Anzeigeeinheit (17) konfiguriert ist, die bildhaften Daten (21, 22, 31) anzuzeigen, die automatisch jedes Mal aktualisiert werden, wenn eine vorbestimmte Aktualisierungszeit abläuft.

7. Spinnmustereinstellvorrichtung (10) für die Spinnmaschine nach einem der Ansprüche 1 bis 5, **dadurch gekennzeichnet, dass**
die Anzeigeeinheit (17) konfiguriert ist, die bildhaften Daten (21, 22, 31) zu aktualisieren und erneut anzuzeigen, wenn zumindest einer der Parameter geändert wird.

8. Spinnmustereinstellvorrichtung (10) für die Spinnmaschine nach einem der Ansprüche 1 bis 7, **dadurch gekennzeichnet, dass**
die Anzeigeeinheit (17) konfiguriert ist, lediglich einen Teil der bildhaften Daten (21, 22, 31), der geändert wird, zu aktualisieren und erneut anzuzeigen.

## Revendications

1. Appareil d'établissement de patron de filage (10) pour un métier à filer, comprenant :
une unité de saisie de paramètres (14) utilisée pour entrer une pluralité de paramètres d'un fil devant être filé par le métier à filer ;
une unité de génération de données de patron configurée pour générer des données de patron à partir des paramètres entrés via l'unité de saisie de paramètres (14) ;
une unité de génération de données picturales configurée pour générer des données picturales (21, 22, 31) sur la base des données de patron générées par l'unité de génération de données de patron ; et
une unité d'affichage (17) configurée pour afficher les données picturales (21, 22, 31) générées par l'unité de génération de données picturales, **caractérisé en ce que**
l'unité de génération de données de patron est configurée pour générer automatiquement les données de patron sans dépendre d'une instruction par un opérateur, et
l'unité de génération de données picturales est configurée pour générer, chaque fois que les données de patron sont générées, les données picturales (21, 22, 31) de sorte que les données picturales (21, 22, 31) soient mises à jour et affichées de nouveau dans l'unité d'affichage (17).

2. Appareil d'établissement de patron de filage (10) pour le métier à filer selon la revendication 1, **caractérisé en ce que**
les données picturales (21, 22, 31) sont une image picturale (21, 22) générée dans une simulation sur la base des données de patron.

3. Appareil d'établissement de patron de filage (10) pour le métier à filer selon la revendication 1, **caractérisé en ce que**
les données picturales (21, 22, 31) sont des données picturales de graphique de distribution (31) générées sur la base des données de patron.

4. Appareil d'établissement de patron de filage (10) pour le métier à filer selon la revendication 1, **caractérisé en ce que**
l'unité de génération de données de patron est configurée pour commander l'unité d'affichage (17) pour afficher un panneau de saisie de paramètres (20) conjointement avec les données picturales (21, 22, 31).

5. Appareil d'établissement de patron de filage (10) pour le métier à filer selon l'une quelconque des revendications 1 à 3, **caractérisé en ce que**
le fil devant être filé est un fil flammé, et
les données de patron sont des données de patron flammé spécifiées par les paramètres du fil flammé incluant un pas, une longueur et une épaisseur flammée.

6. Appareil d'établissement de patron de filage (10) pour le métier à filer selon l'une quelconque des revendications 1 à 5, **caractérisé en ce que**
l'unité d'affichage (17) est configurée pour afficher les données picturales (21, 22, 31) qui sont automatiquement mises à jour chaque fois qu'un temps de mise à jour prédéterminé s'écoule.

7. Appareil d'établissement de patron de filage (10) pour le métier à filer selon l'une quelconque des revendications 1 à 5, **caractérisé en ce que**
l'unité d'affichage (17) est configurée pour mettre à jour et afficher de nouveau les données picturales (21, 22, 31) lorsqu'au moins l'un des paramètres est modifié.

8. Appareil d'établissement de patron de filage (10) pour le métier à filer selon l'une quelconque des revendications 1 à 7, **caractérisé en ce que**
l'unité d'affichage (17) est configurée pour mettre à jour et afficher de nouveau seulement la partie des données picturales (21, 22, 31) qui est modifiée.
